# EUROPEAN PATENT APPLICATION

(11) **EP 4 160 794 A1**
(43) Date of publication of application: **05.04.2023**
(21) Application number: 21812868.4
(22) Date of filing: 20.05.2021
(51) Int. Cl.: H01M 50/15, H01M 50/103, H01M 50/10, H01M 50/172, H01M 50/543, H01M 50/528, H01M 10/04

(54) **SECONDARY BATTERY**

(30) Priority: 25.05.2020 KR 20200062445
(71) Applicant: Samsung SDI Co., Ltd., Yongin-si, Gyeonggi-do 17084 (KR)
(72) Inventor: CHOI, Jung Woo, Yongin-si, Gyeonggi-do 17084 (KR); LEE, Byung Ik, Yongin-si, Gyeonggi-do 17084 (KR); HA, Ji Kwang, Yongin-si, Gyeonggi-do 17084 (KR); PARK, Jin Sub, Yongin-si, Gyeonggi-do 17084 (KR); LEE, Kyoung Taek, Yongin-si, Gyeonggi-do 17084 (KR); SONG, Min Yeong, Yongin-si, Gyeonggi-do 17084 (KR); KIM, Sang Hun, Yongin-si, Gyeonggi-do 17084 (KR)
(74) Representative: Gulde & Partner
(86) International application number: PCT/KR2021/006297
(87) International publication number: WO 2021/241939

(57) **Abstract**

An embodiment of the present invention relates to a secondary battery comprising: an electrode assembly which has an anode tab formed at one end thereof and a cathode tab formed at the other end thereof; a case in which the electrode assembly is received and which is open at both opposite ends thereof; and a pair of cap assemblies which are coupled to the respective open ends of the case. According to the present invention, the cap assemblies are formed at the opposite sides of the case and thus cathode and anode terminals of the cap assemblies can have the same direction as the cathode and anode tabs of the electrode assembly, which makes it possible to simplify the shape of and minimize the length of a current collector.

## Description

### TECHNICAL FIELD

An embodiment of the present invention relates to a prismatic secondary battery having a bidirectional terminal.

### BACKGROUND ART

A secondary battery includes an electrode assembly having a cathode, a anode, and a separator interposed between the cathode and the anode, a case having one side open to receive the electrode assembly together with an electrolyte, and a cap assembly sealing an open side of the case.

In general, a cap assembly of a secondary battery includes a cathode terminal and an anode terminal which are electrically connected to the cathode and the anode of the electrode assembly. Any one of the cathode terminal and the anode terminal is different in the direction from the electrode tab of the electrode assembly, and thus the shape of the current collector connecting the electrode tab and the terminal of the cap assembly is complicated and the length thereof is increased.

The above information disclosed in this Background section is only for enhancement of understanding of the background of the invention and therefore it may contain information that does not constitute prior art.

### DESCRIPTION OF EMBODIMENTS

### TECHNICAL PROBLEM

The present invention provides a secondary battery in which cap assemblies are formed at the opposite sides of a case and thus cathode and anode terminals of the cap assemblies can have the same direction as the cathode and anode tabs of the electrode assembly.

### SOLUTION TO PROBLEM

A secondary battery according to an embodiment of the present invention includes: an electrode assembly which has an anode tab formed at one end thereof and a cathode tab formed at the other end thereof; a case in which the electrode assembly is received and which is open at both opposite ends thereof; and a pair of cap assemblies which are coupled to the respective open ends of the case.

The anode tab and the cathode tab are disposed at the respective opposite ends in the longitudinal direction of a winding axis of the electrode assembly.

The case has the longitudinally opposite ends opened.

The cap assemblies may include an anode cap assembly having a cap plate coupled to one end of the case, an anode terminal formed on the cap plate and electrically connected to the anode tab, a cathode cap assembly having a cap plate coupled to the other end of the case, and a cathode terminal formed on the cap plate and electrically connected to the cathode tab.

Each of the anode terminal and the cathode terminal may include a terminal plate electrically connected to an external terminal, a current collector electrically connected to the anode tab or the cathode tab, and a terminal pin coupled to the current collector and the terminal plate and electrically connecting the current collector and the terminal plate.

Each of the cap assemblies may include a first insulating member made of an insulating material, which is disposed between the terminal plate and the cap plate of each of the anode terminal and the cathode terminal, a second insulating member made of an insulating material, which is disposed between the terminal pin and the cap plate, a third insulating member made of an insulating material, which is disposed between the cap plate and the electrode assembly, and a fourth insulating member made of an insulating material, which is disposed between the third insulating member and the electrode assembly.

Each of the cap assemblies may include a first insulating member made of an insulating material disposed between the terminal plate and the cap plate of the anode terminal, a second insulating member made of an insulating material, which is disposed between the terminal pin and the cap plate, a third insulating member made of an insulating material, which is disposed between the cap plate and the electrode assembly, and a fourth insulating member made of an insulating material disposed between the third insulating member and the electrode assembly, wherein the third insulating member made of an insulating material, which is disposed between the cap plate of the cathode terminal and the electrode assembly, and the fourth insulating member made of an insulating material disposed between the third insulating member and the electrode assembly, are included.

Each of the fourth insulating members has a slit, into which the anode tab or the cathode tab is inserted, formed through a plate surface.

The anode tab or the cathode tab is electrically connected to the current collector between the third insulating member and the fourth insulating member.

In addition, the present invention provides a secondary battery comprising: an electrode assembly in which electrode tabs having different polarities are formed at longitudinally opposite ends, respectively; a case in which the electrode assembly is received and which is open at longitudinally opposite ends thereof; and a pair of cap assemblies which are coupled to the respective open opposite ends of the case.

Each of the cap assemblies includes a cap plate coupled to the open end of the case, a terminal formed on the cap plate and electrically connected to the electrode tab, and a plurality of insulating members made of an insulating material.

The terminal includes a terminal plate electrically connected to an external terminal, a current collector electrically connected to the electrode tab, and a terminal pin coupled to the current collector and the terminal plate to electrically connect the current collector and the terminal plate.

Each of the cap assemblies includes a first insulating member disposed between the terminal plate and the cap plate, a second insulating member disposed between the terminal pin and the cap plate, a third insulating member disposed between the cap plate and the electrode assembly, and a fourth insulating member disposed between the third insulating member and the electrode assembly.

The fourth insulating member has a slit, into which the electrode tab is inserted, formed through the plate surface.

The electrode tab is electrically connected to the current collector between the third insulating member and the fourth insulating member.

### ADVANTAGEOUS EFFECTS OF DISCLOSURE

According to an embodiment of the present invention, by forming cap assemblies in both directions of a case, cathode and anode tabs of an electrode assembly and cathode and anode terminals of each of the cap assemblies have the same directions, thereby simplifying the shape of a current collector and minimizing the length thereof.

In addition, terminals are formed in both directions of the secondary battery, and thus the degree of assembly freedom in the longitudinal direction of the secondary battery is improved, thereby greatly increasing the length of the secondary battery.

### BRIEF DESCRIPTION OF DRAWINGS

FIG. 1 is a perspective view illustrating a secondary battery according to an embodiment of the present invention.
FIG. 2 is a partially exploded perspective view of the secondary battery illustrated in FIG. 1.
FIG. 3 is a longitudinal cross-sectional view of the secondary battery illustrated in FIG. 1.
FIG. 4A is a cross-sectional view of an anode terminal portion of a cap assembly illustrated in FIG. 1.
FIG. 4B is a plan view of the cap assembly illustrated in FIG. 4A.
FIG. 4C is a rear view of the cap assembly illustrated in FIG. 4A.
FIG. 5A is a cross-sectional view illustrating a cathode terminal portion of the cap assembly illustrated in FIG. 1.
FIG. 5B is a plan view of the cap assembly illustrated in FIG. 5A.
FIG. 5C is a rear view of the cap assembly illustrated in FIG. 5A.

### BEST MODE

The present disclosure, however, may be embodied in many different forms and should not be construed as being limited to the example (or exemplary) embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

Hereinafter, a secondary battery according to an embodiment of the present invention will be described in detail with reference to the accompanying drawings.

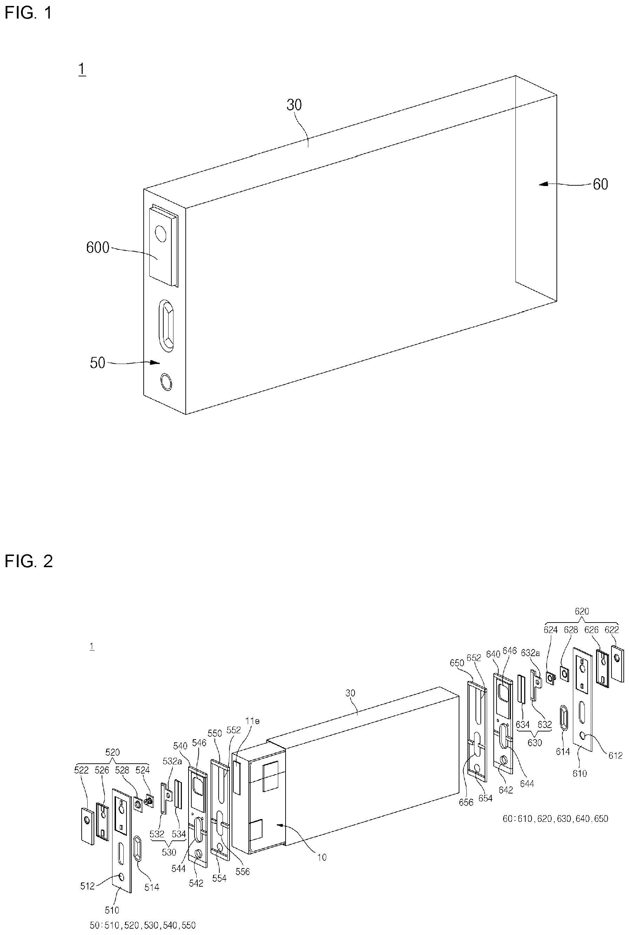

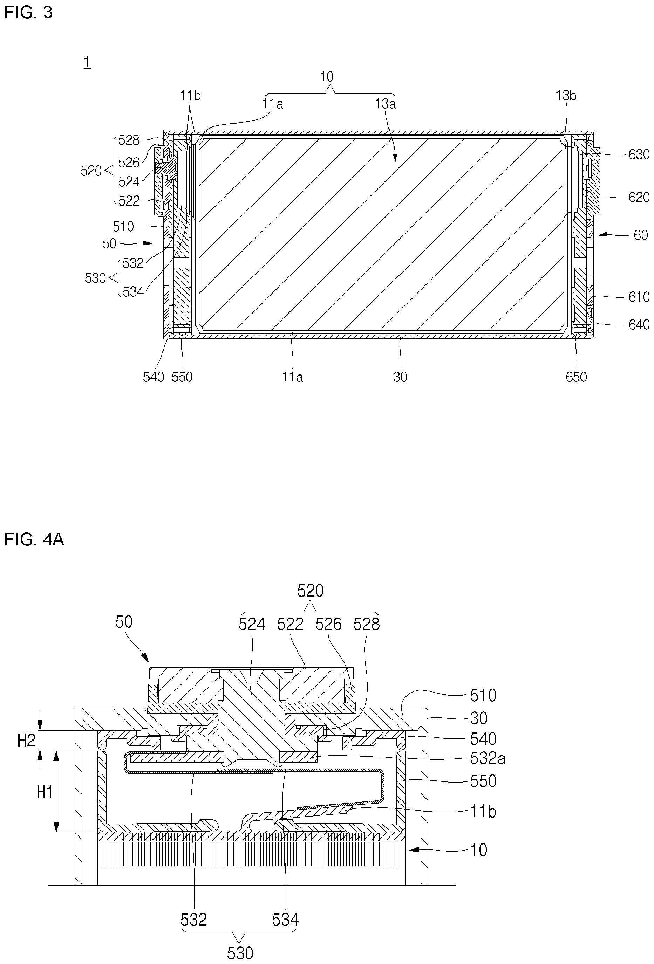

FIG. 1 is a perspective view illustrating a secondary battery according to an embodiment of the present invention. FIG. 2 is a partially exploded perspective view of the secondary battery illustrated in FIG. 1. FIG. 3 is a longitudinal cross-sectional view of the secondary battery illustrated in FIG. 1.

As shown in FIGS. 1 to 3, the secondary battery 1 according to an embodiment of the present invention may include an electrode assembly 10, a case 30, and a pair of cap assemblies 50 and 60.

In the secondary battery 1, the electrode assembly 10 is received in the case 30 having opposite ends opened, and cap assemblies 50 and 60 are coupled to each of the opened opposite ends to seal the case 30.

The electrode assembly 10 may be formed by stacking or winding an anode plate 11a, a separator, and a cathode plate 13a, which are formed in a thin plate shape or a film shape.

The anode plate 11a may be formed by coating an anode active material such as graphite or carbon on an anode substrate formed of a metal foil such as copper, a copper alloy, nickel, or a nickel alloy. An anode uncoated region to which the anode active material is not applied may be formed in some regions of the anode substrate. An anode tab 11b is formed on the anode uncoated region, and the anode tab 11b and an anode terminal 520 to be described later may be electrically connected to each other by an anode current collector to be described later. The anode tab 11b may be formed to face one side along the longitudinal direction of a winding axis of the electrode assembly 10.

The cathode plate 13a may be formed by coating a cathode active material such as graphite or carbon on a cathode formed of a metal foil such as aluminum or an aluminum alloy. A cathode uncoated region to which the cathode active material is not applied may be formed in some regions of the cathode substrate. A cathode tab 13b is formed on the cathode uncoated region, and the cathode tab 13b and a cathode terminal 620 to be described later may be electrically connected to each other by a cathode current collector to be described later. The cathode tab 13b may be formed to face the other side along the longitudinal direction of the winding axis of the electrode assembly 10.

That is, the above-described anode tab 11b and cathode tab 13b are disposed to face each other in opposite directions along the longitudinal direction of the winding axis of the electrode assembly 10. For example, the anode tab 11b and the cathode tab 13b may be disposed to face opposite directions along the longitudinal direction of the secondary battery 1 with reference to FIG. 1.

The separator is disposed between the anode plate 11a and the cathode plate 13a to prevent short circuit and enable movement of lithium ions. The separator may be made of polyethylene, polypropylene, a composite film of polyethylene and polypropylene, or the like, but is not limited thereto.

The case 30 may be formed of a conductive metal such as aluminum, an aluminum alloy, or nickel-plated steel. For example, the case 30 may have a rectangular parallelepiped shape, and longitudinally opposite ends thereof may be opened. The electrode assembly 10 is received in the case 30 together with the electrolyte, and the cap assemblies 50 and 60 are coupled to the respective open opposite ends to seal the case 30.

Hereinafter, the structures of the cap assemblies 50 and 60 will be described in detail.

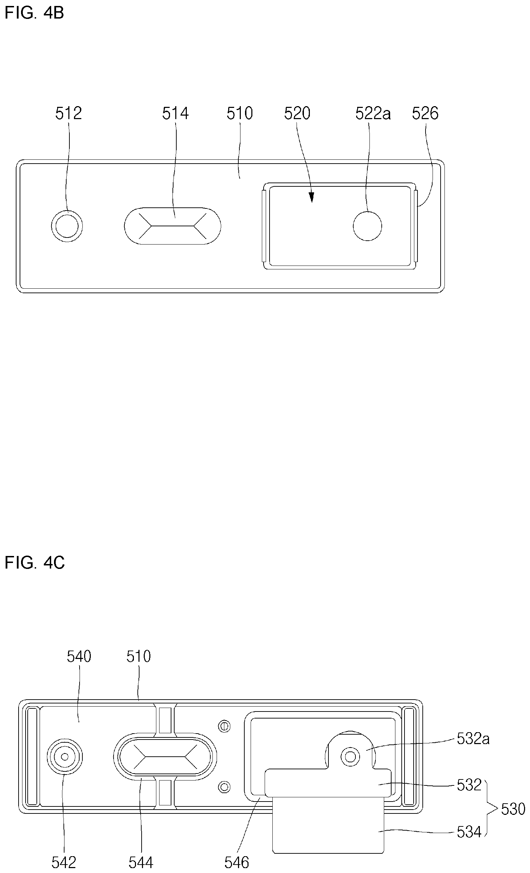

FIG. 4A is a cross-sectional view of an anode terminal portion of a cap assembly illustrated in FIG. 1. FIG. 4B is a plan view of the cap assembly illustrated in FIG. 4A. FIG. 4C is a rear view of the cap assembly illustrated in FIG. 4A.

As shown in FIGS. 2 to 4C, the anode cap assembly 50 may include a cap plate 510, an anode terminal 520, and a plurality of insulating members 526, 528, 540, and 550.

As shown in FIGS. 2, 4A and 4B, the cap plate 510 seals an opening of the case 30 and may be made of the same material as the case 30. In addition, for example, the cap plate 510 may have a rectangular parallelepiped shape corresponding to the shape of the opening of the case 30. For example, the cap plate 510 may be coupled to the case 30 by laser welding. An injection port 512 and an anode safety vent 514 are formed in the cap plate 510, and the anode terminal 520 may be coupled thereto.

The injection port 512 is a hole for injecting the electrolyte into the case 30, and may be sealed by a separate stopper, etc. The anode safety vent 514 has a notch formed to be opened at a set pressure, and serves to discharge gas when the internal pressure of the secondary battery 1 rises.

As shown in FIGS. 2 to 4C, the anode terminal 520 includes a terminal plate 522, a terminal pin 524, first and second insulating members 526 and 528, and an anode current collector 530.

As shown in FIGS. 2, 4A and 4B, the terminal plate 522 is formed on the plate surface of the cap plate 510 exposed to the outside (for convenience, to be defined as an outer surface), and has a substantially rectangular plate shape. The terminal plate 522 is also called an anode terminal, is formed of metal and is electrically connected to an external terminal. The terminal plate 522 may be electrically connected to the anode current collector 530 by a terminal pin 524. To this end, a coupling portion in the form of a through hole or groove to which the terminal pin 524 is coupled may be formed on the lower surface of the terminal plate 522 (the lower surface of FIG. 4A). A first insulating member 526 is inserted between the terminal plate 522 and the cap assembly 50.

The first insulating member 526 has a plate shape corresponding to the shape of the terminal plate 522, and insulates the terminal plate 522 and the cap plate 510 from each other to prevent a short circuit therebetween.

As shown in FIGS. 2 to 4A, the terminal pin 524 has a shape similar to a bolt, and electrically connects the anode current collector 530 and the terminal plate 522. A ringshaped second insulating member 528 having a predetermined width is inserted between the terminal pin 524 and the cap plate 510 to insulate the terminal pin 524 and the cap plate 510 from each other. While being coupled to the anode current collector 530, the terminal pin 524 has one end sequentially passing through the second insulating member 528, the cap plate 510, and the first insulating member 526 to then extend to and contact the terminal plate 522.

As shown in FIGS. 2 to 4A and 4C, the anode current collector 530 is disposed between the third and fourth insulating members 540 and 550 to be described later, and is electrically connected to the anode terminal 520 and the anode tab 11b. In more detail, the anode current collector 530 has a strip (small plate) shape having a predetermined size, and is formed of a conductive metal. A pin coupling part to which a terminal pin is coupled is formed on one side of the anode current collector 530, and the other side of the anode current collector 530 may be curved or bent to be electrically connected to the anode tab 11b.

Alternatively, the anode current collector 530 is composed of a thin plate-shaped main current collector plate 532 in which the pin insertion part 532a is formed and a thin plate-shaped auxiliary current collector plate 534 which is electrically connected to the anode tab 11b, and the main current collector plate 532 and the auxiliary current collector plate 534 may be electrically connected thereto (two anode current collectors are shown in the drawing). The main current collecting plate 532 and the auxiliary current collecting plate 534, and the main current collecting plate 532 and the anode tab 11b, may be connected by, but not limited to, laser welding.

As shown in FIGS. 2 to 4A and 4C, the third and fourth insulating members 540 and 550 are made of an insulating material and have a plate shape corresponding to the shape of the cap plate 510. However, the third insulating member 540 and the fourth insulating member 550 may be formed to have different sizes and heights of slits or holes formed through the plate surface.

The third insulating member 540 is provided between the inner surface of the cap plate 510 and the electrode assembly 10 to insulate the cap plate 510 and the electrode assembly 10 from each other to prevent a short circuit therebetween. A first through hole 542 and a second through hole 544 are formed on the third insulating member 540 to correspond to the positions of the injection port 512 and the anode safety vent 514 described above. Electrolyte injection and gas movement are performed through the first through hole 542 and the second through hole 544. In addition, a third through hole 546 through which the aforementioned terminal pin 524 passes is formed on the third insulating member 540. A terminal pin 524 coupled to the main current collector plate 532 disposed between the third insulating member 540 and the fourth insulating member 550 through the third through hole 546 may extend to the terminal plate 522.

The fourth insulating member 550 is provided between the third insulating member 540 and the electrode assembly 10 for insulation of an end of the electrode assembly 10. The height of the fourth insulating member 550 (H1, the vertical width based on FIG. 4A) forms a space for the main current collecting plate 532 and the auxiliary current collecting plate 534, and thus may be formed higher than the height of the third insulating member 540. In addition, a slit 552 through which the anode tab 11b passes, a fourth through hole 554 and a fifth through hole 556 located and shaped to correspond to the injection port 512 and the anode safety vent 514, are formed on the fourth insulating member 550. The anode tab 11b protrudes between the third insulating member 540 and the fourth insulating member 550 through the slit 552, and the auxiliary current collecting plate 534 is electrically connected to the protruding anode tab 11b.

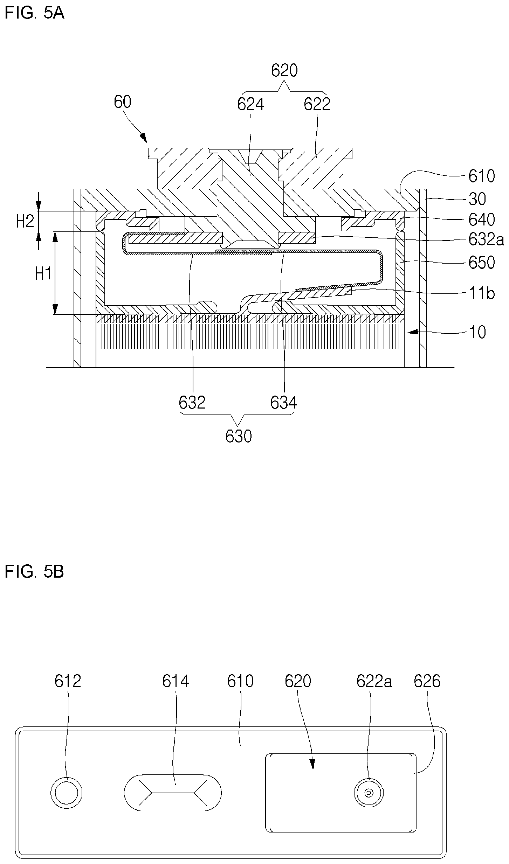

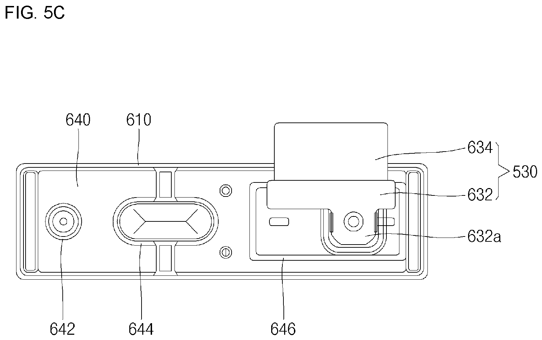

FIG. 5A is a cross-sectional view illustrating a cathode terminal portion of the cap assembly illustrated in FIG. 1. FIG. 5B is a plan view of the cap assembly illustrated in FIG. 5A. FIG. 5C is a rear view of the cap assembly illustrated in FIG. 5A.

As shown in FIGS. 2, 3 and 5A to 5C, the cathode cap assembly 60 may include a cap plate 610, a cathode terminal 620, and a plurality of insulating members 640 and 650.

In the cap plate 610, an injection port 612 and a cathode safety vent 614 are formed, and the cathode terminal 620 may be coupled thereto.

The cathode terminal 620 may include a terminal plate 622, a terminal pin 624, and a cathode current collector 630. A first insulating member 626 is inserted between the terminal plate 622 and the cap assembly 60. The terminal pin 624 has a shape similar to a bolt, and electrically connects the cathode current collector 630 and the terminal plate 622. However, unlike the anode cap assembly 50 of FIG. 4A, the first and second insulating members 626 and 628 may be omitted (see FIG. 5A). Of course, the same structure as the anode cap assembly 50 may be employed.

The cathode current collector 630 is composed of a thin plate-shaped main current collector 632 in which a pin insertion part 632A is formed and a thin plate-shaped auxiliary current collector 634 which is electrically connected to the cathode tab 13b, and the main current collecting plate 632 and the auxiliary current collecting plate 634 are electrically connected.

The third insulating member 640 is provided between the inner surface of the cap plate 610 and the electrode assembly 10 to insulate the cap plate 610 and the electrode assembly 10 from each other to prevent a short circuit therebetween. The fourth insulating member 650 is provided between the third insulating member 640 and the electrode assembly 10 for insulation of an end of the electrode assembly 10.

Although the cathode cap assembly 60 is shown differently from the anode cap assembly 50, this is only a difference in the angle of the drawing, and the cathode cap assembly 60 and the anode cap assembly 50 have the same structure.

As described above, in the secondary battery 1 of the present invention, the anode tab 11b and the cathode tab 13b are formed to extend to the respective opposite ends in the longitudinal direction of the winding shaft of the electrode assembly 10 to then be received in the case 30, and the cap assemblies 50 and 60 are coupled to the respective longitudinally opposite ends of the case 30. When a cap assembly is provided on only one side of a structure in which the anode tab and the cathode tab are disposed at opposite sides of the electrode assembly, the anode current collector and the cathode current collector may have increased lengths and complicated shapes.

However, in the present invention, a pair of cap assemblies 50 and 60 are provided and respectively disposed in the same direction as the anode tab 11b and the cathode tab 13b, and thus the anode tab 11b and the cathode tab 13b can be directly connected thereto, thereby shortening the lengths of the current collector 530 and the cathode current collector 630 and simplifying and minimizing the shapes thereof. This is because a dead space existing inside the case 30 is reduced, and thus the energy density per volume of the secondary battery 1 can be improved the energy density per volume of the secondary battery 1 (about 50 Wh/L increase compared to a one-directional terminal structure).

In addition, since terminals are provided in both directions of the secondary battery 1, the reaction uniformity of an electrode plate is relatively improved compared to a structure in which terminals are provided in only one direction, thereby improving the lifespan of the secondary battery 1.

In addition, terminals are formed in both directions of the secondary battery 1, and thus the degree of assembly freedom in the longitudinal direction of the secondary battery 1 is improved, thereby enabling manufacture of a long cell. Additionally, when manufacturing a long cell, the heat dissipation area of the cell is increased, and the amount of swelling can be absolutely reduced. As the length of the secondary battery increases, the energy density and space utilization increase (about 2.6-3% increase compared to the one-way terminal structure), and thus the space utilization rates of a secondary battery module and a battery pack can also be increased by forming a long cell.

According to the structure of the present invention, only the shape of the cap assembly, which is an outer component of a secondary battery, is changed without changing the structure of the existing electrode assembly (jelly roll), thereby manufacturing the secondary battery while maintaining the basic characteristics of the secondary battery.

While the foregoing embodiment has been provided for carrying out the present invention, it should be understood that the embodiment described herein should be considered in a descriptive sense only and not for purposes of limitation, and various changes in form and details may be made therein without departing from the spirit and scope of the disclosure as defined by the following claims.

### INDUSTRIAL APPLICABILITY

Embodiments of the present invention can be applied to the field of prismatic secondary batteries having a bidirectional terminal.

## Claims

1. A secondary battery comprising:
an electrode assembly which has an anode tab formed at one end thereof and a cathode tab formed at the other end thereof;
a case in which the electrode assembly is received and which is open at both opposite ends thereof; and
a pair of cap assemblies which are coupled to the respective open ends of the case.

2. The secondary battery of claim 1, wherein the anode tab and the cathode tab are disposed at the respective opposite ends in the longitudinal direction of a winding axis of the electrode assembly.

3. The secondary battery of claim 2, wherein the case has the longitudinally opposite ends opened.

4. The secondary battery of claim 1, wherein the cap assemblies include:
an anode cap assembly having a cap plate coupled to one end of the case, and an anode terminal formed on the cap plate and electrically connected to the anode tab; and
a cathode cap assembly having a cap plate coupled to the other end of the case, and a cathode terminal formed on the cap plate and electrically connected to the cathode tab.

5. The secondary battery of claim 4, wherein each of the anode terminal and the cathode terminal includes a terminal plate electrically connected to an external terminal, a current collector electrically connected to the anode tab or the cathode tab, and a terminal pin coupled to the current collector and the terminal plate and electrically connecting the current collector and the terminal plate.

6. The secondary battery of claim 5, wherein each of the cap assemblies includes a first insulating member made of an insulating material, which is disposed between the terminal plate and the cap plate of each of the anode terminal and the cathode terminal, a second insulating member made of an insulating material, which is disposed between the terminal pin and the cap plate, a third insulating member made of an insulating material, which is disposed between the cap plate and the electrode assembly, and a fourth insulating member made of an insulating material, which is disposed between the third insulating member and the electrode assembly.

7. The secondary battery of claim 5, wherein each of the cap assemblies includes a first insulating member made of an insulating material disposed between the terminal plate and the cap plate of the anode terminal, a second insulating member made of an insulating material, which is disposed between the terminal pin and the cap plate, a third insulating member made of an insulating material, which is disposed between the cap plate and the electrode assembly, and a fourth insulating member made of an insulating material disposed between the third insulating member and the electrode assembly, wherein the third insulating member made of an insulating material, which is disposed between the cap plate of the cathode terminal and the electrode assembly, and the fourth insulating member made of an insulating material disposed between the third insulating member and the electrode assembly, are included.

8. The secondary battery of claim 6 or 7, wherein each of the fourth insulating members has a slit, into which the anode tab or the cathode tab is inserted, formed through a plate surface.

9. The secondary battery of claim 8, wherein the anode tab or the cathode tab is electrically connected to the current collector between the third insulating member and the fourth insulating member.

10. A secondary battery comprising:
an electrode assembly in which electrode tabs having different polarities are formed at longitudinally opposite ends, respectively;
a case in which the electrode assembly is received and which is open at longitudinally opposite ends thereof; and
a pair of cap assemblies which are coupled to the respective open opposite ends of the case.

11. The secondary battery of claim 10, wherein each of the cap assemblies includes a cap plate coupled to the open end of the case, a terminal formed on the cap plate and electrically connected to the electrode tab, and a plurality of insulating members made of an insulating material.

12. The secondary battery of claim 11, wherein the terminal includes a terminal plate electrically connected to an external terminal, a current collector electrically connected to the electrode tab, and a terminal pin coupled to the current collector and the terminal plate to electrically connect the current collector and the terminal plate.

13. The secondary battery of claim 12, wherein each of the cap assemblies includes a first insulating member disposed between the terminal plate and the cap plate, a second insulating member disposed between the terminal pin and the cap plate, and a third insulating member disposed between the cap plate and the electrode assembly, and a fourth insulating member disposed between the third insulating member and the electrode assembly.

14. The secondary battery of claim 13, wherein the fourth insulating member has a slit, into which the electrode tab is inserted, formed through the plate surface.

15. The secondary battery of claim 14, wherein the electrode tab is electrically connected to the current collector between the third insulating member and the fourth insulating member.
